# EUROPÄISCHE PATENTANMELDUNG

(11) **EP 2 813 818 A1**
(43) Veröffentlichungstag der Anmeldung: **17.12.2014**
(21) Anmeldenummer: 14168685.7
(22) Anmeldetag: 16.05.2014
(51) Int. Cl.: G01C 21/36

(54) **Vorrichtung und Verfahren zur Zielführung**

(30) Priorität: 10.06.2013 DE 102013210721
(71) Anmelder: ROBERT BOSCH GMBH, 70442 Stuttgart (DE)
(72) Erfinder: Wald, Nico, 31171 Nordstemmen (DE); Neumann, Christian, 31139 Hildesheim (DE)

(57) **Zusammenfassung**

Vorgeschlagen wird eine Vorrichtung (100) zur Zielführung, insbesondere eines Fahrzeugs, entlang einer Route (202), mit einer Anzeigeeinheit (101) zum Erzeugen und Anzeigen einer wenigstens ein optisches Zielführungselement (203) umfassenden Routendarstellung (200), einer Sprachausgabeeinheit (102) zum Erzeugen (106) und Ausgeben wenigstens einer Zielführungsinformation (103) als gesprochene Worte und/oder Sätze und/ oder Teile davon, sowie einer Steuereinheit (104) zum Steuern des Anzeigens des wenigstens einen optischen Zielführungselements (203) wort- und/oder wortteilsynchron zum Ausgeben der wenigstens einen Zielführungsinformation (103). Vorgeschlagen wird ferner ein entsprechendes Verfahren zur Zielführung. Dadurch erfolgen die optische Anzeige und die Sprachausgabe der Zielführungsinformationen besser zusammenhängend und wird die Verständlichkeit der Zielführung verbessert.

## Beschreibung

### Stand der Technik

In der DE 101 57 518 A1 ist ein Verfahren zur Zielführung eines Fahrzeugs beschrieben, welches ein Erfassen einer aktuellen Position des Fahrzeugs durch ein Navigationssystem, ein Ermitteln einer Route zwischen der aktuellen Position und einer vorher eingegeben Zielposition sowie ein Anzeigen von Zielführungsempfehlungen auf einer Anzeigeeinrichtung, wenn ein Abbiegevorgang erfolgen soll, umfasst. Hierbei erfolgt das Anzeigen der Zielführungsempfehlungen mit Hilfe eines Signalleuchtenfensters mit Signalleuchtensymbolen, durch die die Zielführungsempfehlungen symbolisiert werden. So wird das Signalleuchtenfenster in der mittleren Fahrspur dargestellt, wenn kein Abbiegevorgang erfolgen soll. Beim Abbiegevorgang nach links wird das Signalleuchtenfenster in der linken Fahrspur dargestellt, sowie beim Abbiegevorgang nach rechts wird das Signalleuchtenfenster in der rechten Fahrspur dargestellt. Ferner wird ein Vergleichen einer technischen Höchstgeschwindigkeit mit einer aktuellen Fahrzeuggeschwindigkeit offenbart, und eine Überschreitung der technischen Höchstgeschwindigkeit wird durch Bremslichtsymbole im Signalleuchtenfenster hervorgehoben. Es erfolgen auch weitere Informationen über eine Entfernung bis zum Abbiegepunkt und/oder eine Bezeichnung einer Straße nach dem Abbiegepunkt. Beschrieben wird außerdem eine Darstellung zusätzlicher Orientierungspunkte in einer aktuellen Umgebung des Fahrzeugs, ein Erfassen aktueller Verkehrsnachrichten sowie einer Fahrbahntemperatur.

Aus der DE 100 15 679 A1 ist ein Navigationsgerät bekannt, das eine Streckeneinstelleinheit zum Einstellen einer Strecke, eine Eigenfahrzeugpositionserfassungseinheit zum Messen einer Eigenfahrzeugposition und Erfassen der Eigenfahrzeugposition sowie eine Vorwärtsrichtungserfassungseinheit zum Erfassen einer Vorwärtsrichtung des eigenen Fahrzeugs beinhaltet. Das Fahrzeugnavigationsgerät beinhaltet ferner eine Abzweigungskreuzungserfassungseinheit zum Erfassen einer Kreuzung, in der das eigene Fahrzeug als nächstes abzweigen soll, an der Straße innerhalb eines bestimmten Abstandes in der Vorfahrtrichtung von der eigenen Fahrzeugposition aus.

Außerdem ist eine Abzweigungskreuzungsanzeigeeinheit vorgesehen, die auf die Erfassung einer Abzweigungskreuzung anspricht, um die aus der in einer Landkarteninformationseinheit gespeicherten Landkarteninformation erhaltene Form der Abzweigungskreuzung und eine Richtung, in die das eigene Fahrzeug abzweigen soll, auf dem Bildschirm unter Verwendung von Figuren anzuzeigen, und um weiterhin den Abstand zu der Abzweigungskreuzung und den Namen der Abzweigungskreuzung unter Verwendung von Buchstaben und Zahlen auf dem Bildschirm anzuzeigen.

In dieser Druckschrift wird ferner beschrieben, dass beim Abbiegen an einer Kreuzung die Führungsstreckenentscheidungseinrichtung eine in der Vorfahrtrichtung des eigenen Fahrzeugs liegende Kreuzung sucht, an der das eigene Fahrzeug abzweigen sollte, den Abstand zwischen dem Fahrzeug und der bevorstehenden Kreuzung berechnet und in einem Informationsanzeigebereich eine detaillierte Landkarte um die Kreuzung herum anzeigt, und zwar zusammen mit dem Abstand zum Ziel sowie zur Kreuzung und der Richtung des Abzweigens.

Aus der DE 60 2005 001 809 T2 sind ferner eine Vorrichtung und ein Verfahren zur Navigation und Zielführung bekannt, bei denen eine kombinierte optische Anzeige und akustische Ausgabe von Zielführungsinformationen stattfindet.

Es zeigt sich jedoch, dass bei letztgenannten Vorrichtungen und Verfahren nur ein unzureichender Zusammenhang zwischen der optischen Anzeige der Zielführungsinformationen und der akustischen Ausgabe über eine Sprachausgabeeinheit erzielt wird, wodurch es zu Einschränkungen in der Wahrnehmbarkeit und Verständlichkeit der Zielführung für eine zu führende Person kommen kann.

### Offenbarung der Erfindung

Die Erfindung hat die Aufgabe, eine Vorrichtung zur Zielführung zu schaffen, bei der ein verbesserter Zusammenhang zwischen optischer Anzeige und Sprachausgabe von Zielführungsinformationen gegeben und damit die Verständlichkeit der Zielführung verbessert ist. Die Erfindung hat außerdem die Aufgabe, ein Verfahren zur Zielführung zu schaffen, bei dem die optische Anzeige und die Sprachausgabe der Zielführungsinformationen besser zusammenhängend erfolgen.

Erfindungsgemäß wird diese Aufgabe gelöst durch eine Vorrichtung zur Zielführung, insbesondere eines Fahrzeugs, entlang einer Route, mit einer Anzeigeeinheit zum Erzeugen und Anzeigen einer wenigstens ein optisches Zielführungselement umfassenden Routendarstellung, einer Sprachausgabeeinheit zum Erzeugen und Ausgeben wenigstens einer Zielführungsinformation als gesprochene Worte und/oder Sätze und/ oder Teile davon, sowie einer Steuereinheit zum Steuern des Anzeigens des wenigstens einen optischen Zielführungselements wort- und/oder wortteilsynchron zum Ausgeben der wenigstens einen Zielführungsinformation.

Dabei ist die erfindungsgemäße Vorrichtung nicht nur zur Zielführung eines Fahrzeugs, sondern allgemein eines Verkehrsteilnehmers, somit z.B. auch eines Fußgängers oder dergleichen, einsetzbar. In jedem Fall sind die Routendarstellung und die Zielführungsinformation zur Ausgabe an eine Person vorgesehen. Die Route ist dabei eine von dem Verkehrsteilnehmer zurückzulegende Wegstrecke, die auf übliche Weise durch eine Navigationseinrichtung ermittelt sein kann. Diese Route wird mit Hilfe der Routendarstellung auf der Anzeigeeinheit, insbesondere einem Bildschirm, bildlich dargestellt, wobei die Routendarstellung die gesamte bildliche Darstellung, d.h. das gesamte Bild auf dem Bildschirm, umfasst, insbesondere eine Karte zumindest der Umgebung einer aktuellen Position des Verkehrsteilnehmers mit Straßensymbolen, Richtungspfeilen zur Verdeutlichung der einzuschlagenden Route, und Kartensymbolen wie z.B. symbolischen Darstellungen von Gaststätten, Tankstellen, Supermärkten, Ampeln und anderen. Als Zielführungselemente können davon grundsätzlich alle Elemente dienen, z.B. Richtungs- und Abbiegepfeile, alle Kartensymbole, bevorzugt solche, die auf sogenannte Geländemarkierungen hinweisen bzw. diese darstellen. Als Geländemarkierungen werden alle von der von dem zu führenden Verkehrsteilnehmer einzuschlagenden Route aus gut wahrnehmbaren und daher zur Orientierung des zu führenden Verkehrsteilnehmers entlang der Route geeigneten Objekte bezeichnet, die in die Routendarstellung aufgenommen sind.

In der erfindungsgemäßen Vorrichtung ist die wenigstens eine Zielführungsinformation über die Sprachausgabeeinheit als insbesondere mit synthetisierter menschlicher Sprache gesprochene Empfehlung oder Anweisung zur Zielführung des Verkehrsteilnehmers entlang der Route ausgestaltet. Die Zielführungsinformation enthält als derartige Empfehlungen oder Anweisungen z.B. Richtungshinweise, Abbiegehinweise, usw. in der Form gesprochener Worte, Satzteile oder Sätze.

Das erfindungsgemäß wort- bzw. wortteilsynchrone Anzeigen des wenigstens einen optischen Zielführungselements einerseits und Ausgeben der wenigstens einen Zielführungsinformation andererseits bedeutet eine präzise Zuordnung einzelner Worte oder Wortteile der gesprochenen Zielführungsinformation zur Darstellung des einzelnen optischen Zielführungselementes. Die optische Anzeige und akustische Ausgabe sind damit auf jedes einzelne Wort bzw. jeden einzelnen Wortteil genau aufeinander synchronisiert und damit abgestimmt. Dies ermöglicht eine direkte Verknüpfung einzelner Stichworte der Zielführungsinformation mit einer Visualisierung gezielt dieser Stichworte und entsprechend auch von Wortteilen, Sätzen oder Satzteilen durch ein oder mehrere einzeln auswählbare optische Zielführungselemente.

Die erfindungsgemäße Vorrichtung zur Zielführung hat den Vorteil, eine verbesserte Synchronisierung zwischen optischer Anzeige und Sprachausgabe von Zielführungsinformationen zu schaffen. Dadurch ergibt sich eine bessere Wahrnehmbarkeit und Verständlichkeit der Zielführungsinformation in Verbindung mit der zugehörigen optischen Anzeige. Die erfindungsgemäße Vorrichtung lässt sich außerdem auf einfache Weise in an sich bekannte Navigationseinrichtungen einfügen.

Vorteilhafte Ausgestaltungen der Erfindung sind in den Unteransprüchen gekennzeichnet.

Gemäß einer bevorzugten Weiterbildung der erfindungsgemäßen Vorrichtung umfasst die Sprachausgabeeinheit eine Routenführungseinheit, die zum Erzeugen der wenigstens einen Zielführungsinformation als gesprochene Worte und/oder Sätze und/ oder Wortteile und/oder Satzteile und zum wort- und/oder wortteilsynchronen Verknüpfen der wenigstens einen Zielführungsinformation mit wenigstens einer Zeitsteuerungsinformation für die zeitliche Steuerung wenigstens eines Signalverarbeitungsschrittes zur Darstellung des wenigstens einen Zielführungselements eingerichtet ist.

Die Sprachausgabeeinheit dieser Weiterbildung der erfindungsgemäßen Vorrichtung umfasst damit neben einer Audio-Wiedergabeeinrichtung zur akustischen Wiedergabe der Zielführungsinformation mit einem Lautsprecher oder dergleichen und in üblicher Weise zugehörigen Bauteilen auch die Routenführungseinheit. Diese ist zum Erzeugen der wenigstens einen Zielführungsinformation als gesprochene Worte und/oder Sätze und/ oder Wortteile und/oder Satzteile aus insbesondere einem aktuell ermittelten Standort und einem vorgegebenen Zielort eingerichtet. Insoweit ist die Routenführungseinheit eingerichtet zur Übernahme von Aufgaben einer Navigationseinrichtung, von der die Route ermittelt wird. Die Routenführungseinheit ist gemäß der beschriebenen Weiterbildung ferner zum wort- und/oder wortteilsynchronen Verknüpfen der wenigstens einen Zielführungsinformation mit wenigstens einer Zeitsteuerungsinformation eingerichtet. Die Zeitsteuerungsinformation ist vorgesehen für die zeitliche Steuerung einerseits der Zielführungsinformation und andererseits eines oder mehrerer Signalverarbeitungsschritte zur Darstellung des wenigstens einen Zielführungselements, z.B. dessen Erscheinen in der Routendarstellung, zeitlich vorgegebenen Veränderungen in der Darstellung wie Hervorheben durch Farb-, Form- oder Helligkeitsänderungen oder dergleichen, oder auch ein Verschwinden des Zielführungselements vorzugsweise nach Beendigung der Zielführung des Verkehrsteilnehmers.

Mit dem Begriff Signalverarbeitungsschritt ist im Rahmen der vorliegenden Erfindung auch ein zugehöriges Steuersignal oder ein zugehöriger Steuerbefehl, der diesen Signalverarbeitungsschritt auslöst bzw. steuert, bezeichnet.

Bei einer weiteren bevorzugten Ausführungsform der erfindungsgemäßen Vorrichtung umfasst die Anzeigeeinheit eine Signalaufbereitungseinheit zum Analysieren der wenigstens einen Zielführungsinformation und der damit verknüpften wenigstens einen Zeitsteuerungsinformation und zum Zuordnen der wenigstens einen Zeitsteuerungsinformation zu dem wenigstens einen Signalverarbeitungsschritt zur Darstellung des wenigstens einen Zielführungselements.

Die für die Routendarstellung vorgesehene Anzeigeeinheit dieser Ausführungsform der erfindungsgemäßen Vorrichtung umfasst damit neben einer Bildwiedergabeeinrichtung wie z.B. einem Bildschirm mit zugehörigen und für sich genommen üblichen Bauteilen auch die Signalaufbereitungseinheit zum Analysieren der wenigstens einen Zielführungsinformation und der damit verknüpften wenigstens einen Zeitsteuerungsinformation. Die Signalaufbereitungseinheit ist ferner dazu bestimmt, dem wenigstens einen Signalverarbeitungsschritt zur Darstellung des wenigstens einen Zielführungselements bzw. dem zugehörigen Steuersignal oder Steuerbefehl zum Auslösen bzw. Steuern dieses Signalverarbeitungsschrittes die wenigstens eine Zeitsteuerungsinformation zuzuordnen.

In einer weiteren bevorzugten Ausgestaltung der erfindungsgemäßen Vorrichtung ist die Steuereinheit mit der Routenführungseinheit und der Signalaufbereitungseinheit verbunden zum der Steuereinheit Zuführen der wenigstens einen Zeitsteuerungsinformation und der damit verknüpften wenigstens einen Zielführungsinformation einerseits sowie des wenigstens einen Signalverarbeitungsschrittes zur Darstellung des wenigstens einen Zielführungselements und der zugeordneten wenigstens einen Zeitsteuerungsinformation andererseits.

Durch die Steuereinheit sind somit über die sowohl der Zielführungsinformation als auch dem Signalverarbeitungsschritt zur Darstellung des Zielführungselements gemeinsame Zeitsteuerungsinformation beide Wiedergaben, nämlich die optische des Zielführungselements und die akustische der Zielführungsinformation, auf präzise Weise synchron aus lösbar.

Demgemäß ist nach einer bevorzugten Weiterbildung der erfindungsgemäßen Vorrichtung die Steuereinheit eingerichtet zum korrelierten, insbesondere zumindest im wesentlichen gleichzeitigen, Auslösen der Wiedergabe je einer der mit der wenigstens einen Zeitsteuerungsinformation verknüpften wenigstens einen Zielführungsinformation durch die Sprachausgabeeinheit einerseits und des der wenigstens einen Zeitsteuerungsinformation zugeordneten wenigstens einen Signalverarbeitungsschrittes zur Darstellung des wenigstens einen Zielführungselements durch die Anzeigeeinheit andererseits.

Die oben genannte Aufgabe wird weiterhin gelöst durch ein Verfahren zur Zielführung, insbesondere eines Fahrzeugs, entlang einer Route, wobei durch eine Routenführungseinheit aus Daten der Route wenigstens eine Zielführungsinformation als gesprochene Worte und/oder Sätze und/ oder Wortteile und/oder Satzteile erzeugt und die wenigstens eine Zielführungsinformation mit wenigstens einer Zeitsteuerungsinformation wort- und/oder wortteilsynchron verknüpft wird; wobei weiterhin in einer Signalaufbereitungseinheit die wenigstens eine Zielführungsinformation und die damit verknüpfte wenigstens eine Zeitsteuerungsinformation analysiert werden und die wenigstens eine Zeitsteuerungsinformation wenigstens einem Signalverarbeitungsschritt zur Darstellung wenigstens eines optischen Zielführungselements in einer Anzeigeeinheit zugeordnet wird; und wobei durch eine Steuereinheit die Wiedergabe der mit der wenigstens einen Zeitsteuerungsinformation wort- und/oder wortteilsynchron verknüpften wenigstens einen Zielführungsinformation einerseits und des der wenigstens einen Zeitsteuerungsinformation zugeordneten wenigstens einen Signalverarbeitungsschrittes zur Darstellung des wenigstens einen optischen Zielführungselements andererseits korreliert, insbesondere zumindest im wesentlichen gleichzeitig, ausgelöst werden. Die Darstellung des wenigstens einen optischen Zielführungselements in der Anzeigeeinheit ist dabei auch als Steuern des Anzeigens dieses wenigstens einen optischen Zielführungselements in der Anzeigeeinheit zu verstehen.

Zusammengefasst erzeugt die Routenführungseinheit aus der Vorgabe eines aktuell ermittelten Standortes und eines vorgegebenen Zielortes eine Zielführungsinformation und verknüpft diese wort- bzw. wortteilgenau, d.h. nach einzelnen Stichworten oder Stichwortteilen der Zielführungsinformation, mit einer Zeitsteuerungsinformation. Die Signalaufbereitungseinheit analysiert die Zielführungsinformation und die damit verknüpfte Zeitsteuerungsinformation und ordnet dieser Zeitsteuerungsinformation einen Signalverarbeitungsschritt zur Darstellung eines Zielführungselements zur gezielten, individuellen Visualisierung des betreffenden Stichwortes oder Stichwortteils zu. Die der Zielführungsinformation und dem Signalverarbeitungsschritt gemeinsam zugeordnete Zeitsteuerungsinformation sorgt dann dafür, dass optische und akustische Wiedergabe synchron erfolgen.

Das erfindungsgemäße Verfahren zur Zielführung hat den Vorteil, optische Anzeige und Sprachausgabe einer Zielführungsinformation präziser zu synchronisieren. Dadurch wird die Zielführungsinformation in Verbindung mit der zugehörigen optischen Anzeige für den zu führenden Verkehrsteilnehmer besser wahrnehmbar und verständlich. Das erfindungsgemäße Verfahren lässt sich außerdem auf einfache Weise in an sich bekannten Navigationseinrichtungen einführen.

Ein Ausführungsbeispiel der Erfindung ist in der Zeichnung dargestellt und wird im nachfolgenden näher beschrieben. Es zeigen:
Figur 1 ein Beispiel für eine schematische Gliederung einer erfindungsgemäßen Vorrichtung sowie eines erfindungsgemäßen Verfahrens und
Figur 2 eine grob schematische Abbildung einer Routendarstellung in einer Vorrichtung gemäß Figur 1.

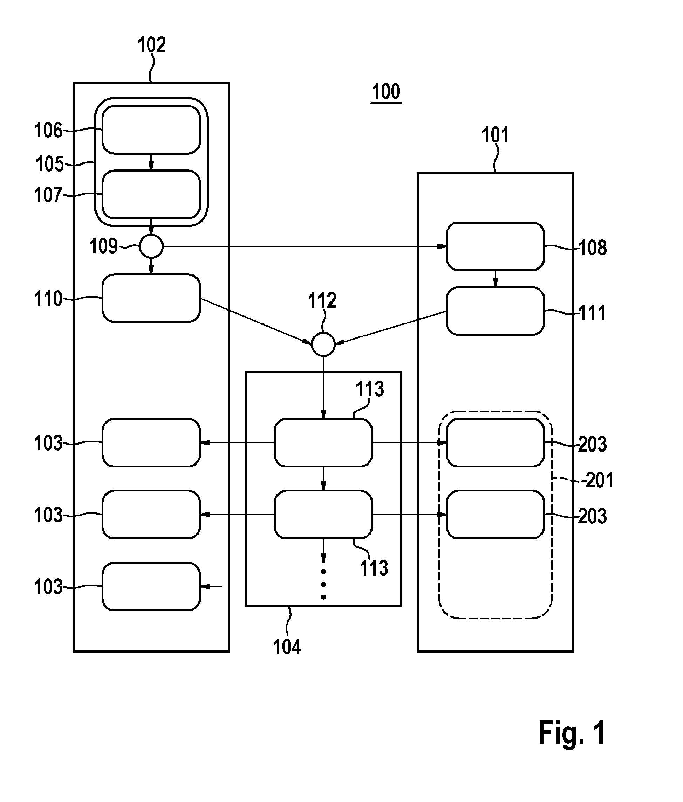

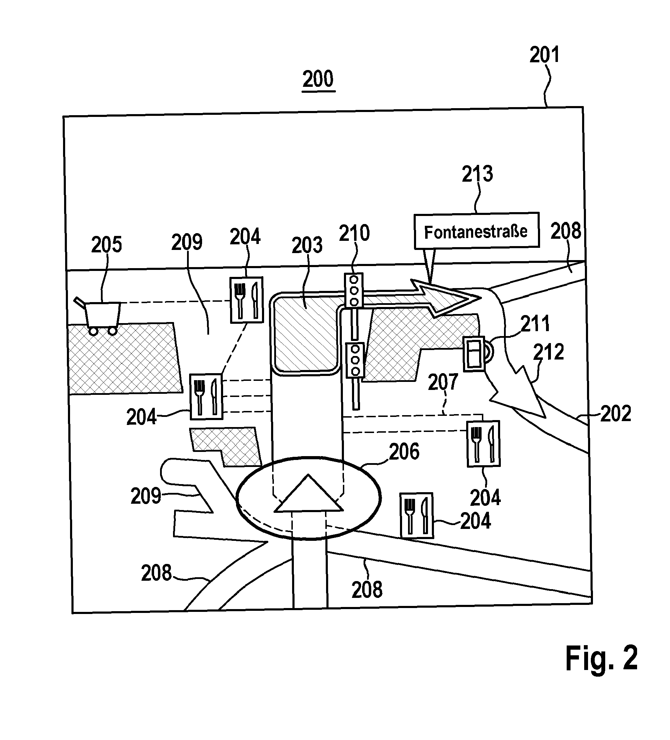

Figur 1 zeigt in schematischer Form eine Gliederung eines Ausführungsbeispiels für eine erfindungsgemäße Vorrichtung 100, die zugleich ein Ablaufdiagramm eines Ausführungsbeispiels für ein erfindungsgemäßes Verfahren darstellt. Figur 2 zeigt in grob schematischer Form eine Routendarstellung 200, wie sie auf einem Bildschirm 201 einer Anzeigeeinheit 101 des Ausführungsbeispiels der erfindungsgemäßen Vorrichtung 100 zu einem vorgegebenen Zeitpunkt darstellbar ist. In der gesamten Zeichnung sind übereinstimmende Elemente mit denselben Bezugszeichen versehen.

Im Ausführungsbeispiel nach Figur 1 enthält die dort dargestellte Vorrichtung 100 eine Sprachausgabeeinheit 102, die wiederum eine Routenführungseinheit 105 umfasst. Die Routenführungseinheit 105 ist mit zwei Stufen ausgebildet. In einer ersten Stufe 106 werden Zielführungsinformationen 103 für eine von einem Verkehrsteilnehmer einzuschlagende und in Figur 2 bildlich schematisch dargestellte Route 202 erzeugt. Die Zielführungsinformationen 103 sind aus Worten oder Sätzen bzw. Wortteilen oder Satzteilen zusammengesetzt, die zur Wiedergabe durch die Sprachausgabeeinheit 102 mit synthetisierter menschlicher Sprache bestimmt sind. In einer zweiten Stufe 107 der Routenführungseinheit 105 werden diese Zielführungsinformationen 103 mit Zeitsteuerungsinformationen verknüpft.

Diese Verknüpfung erfolgt wortgenau bzw. wortteilgenau, bevorzugt silbengenau, so dass jeder Silbe und damit jedem Stichwort innerhalb jeder Zielführungsinformation 103 eine Zeitsteuerungsinformation zugeordnet sein kann.

Über eine Verbindung 109 werden die Zielführungsinformationen 103 und die damit verknüpften Zeitsteuerungsinformationen einer dritten Stufe 110 innerhalb der Sprachausgabeeinheit 102 zugeführt. Die dritte Stufe 110 ist eingerichtet zum Vorbereiteten der Zielführungsinformationen 103 für die akustische Wiedergabe.

Über die Verbindung 109 werden die Zielführungsinformationen 103 und die damit verknüpften Zeitsteuerungsinformationen außerdem einer Signalaufbereitungseinheit 108 zugeführt, die von der Anzeigeeinheit 101 umfasst ist. In der Signalaufbereitungseinheit 108 werden die Zielführungsinformationen 103 und die damit verknüpften Zeitsteuerungsinformationen analysiert und die wenigstens eine Zeitsteuerungsinformation wenigstens einem Signalverarbeitungsschritt zur Darstellung, d.h. zum Steuern des Anzeigens, eines oder ggf. mehrerer optischer Zielführungselemente 203 in einer Anzeigeeinheit 101 zugeordnet. Dabei ist mit dem Begriff Signalverarbeitungsschritt auch ein zugehöriges Steuersignal oder ein zugehöriger Steuerbefehl, der diesen Signalverarbeitungsschritt auslöst bzw. steuert, bezeichnet. In der Signalaufbereitungseinheit 108 wird somit jedes derartige Steuersignal bzw. jeder derartige Steuerbefehl einer Zeitsteuerungsinformation zugeordnet, und zwar der Zeitsteuerungsinformation, die mit dem Stichwort verknüpft ist, welches durch das bzw. die Zielführungselemente 203 in der Routendarstellung 200 visualisiert werden soll. Durch die Analyse der - akustischen-Zielführungsinformationen 103 und der damit verknüpften Zeitsteuerungsinformationen wird also ermittelt, welches Zielführungselement bzw. welche Zielführungselemente 203 in der Routendarstellung 200 synchron zu der bzw. den betreffenden Zielführungsinformationen 103 zu visualisieren sind. In Figur 2 ist als Beispiel eines solchen Zielführungselements 203 ein Abbiegepfeil dargestellt.

Entsprechend der dritten Stufe 110 innerhalb der Sprachausgabeeinheit 102 enthält auch die Anzeigeeinheit 101 eine Stufe 111, der die Signalverarbeitungsschritte zur Darstellung der Zielführungselemente 203 mit den zugeordneten Zeitsteuerungsinformationen zugeführt werden und die eingerichtet ist zum Vorbereiten der Darstellung der Zielführungselemente 203 und gegebenenfalls weiterer Elemente der Routendarstellung 200 in der Anzeigeeinheit 101.

Über eine weitere Verbindung 112 werden die für die akustische Wiedergabe vorbereiteten Zielführungsinformationen 103 und die damit verknüpften Zeitsteuerungsinformationen von der dritten Stufe 110 innerhalb der Sprachausgabeeinheit 102 an eine Steuereinheit 104 geleitet. Über die weitere Verbindung 112 werden ferner die in der Stufe 111 der Anzeigeeinheit 101 für die Darstellung vorbereiteten Zielführungselemente 203 mit den zugeordneten Zeitsteuerungsinformationen der Steuereinheit 104 zugeführt. Die synchron wiederzugebenden Zielführungsinformationen 103 und Zielführungselemente 203 stehen damit, korreliert durch die gemeinsamen Zeitsteuerungsinformationen, in der Steuereinheit zur Wiedergabe zur Verfügung.

Durch die Steuereinheit 104 wird nun nach Maßgabe der gemeinsamen Zeitsteuerungsinformationen die Wiedergabe der mit den Zeitsteuerungsinformationen wort- und/oder wortteilsynchron verknüpften Zielführungsinformationen 103 einerseits und der den Zeitsteuerungsinformationen zugeordneten Signalverarbeitungsschritte zur Darstellung der optischen Zielführungselemente 203 andererseits korreliert ausgelöst. Insbesondere erfolgt diese Auslösung der Wiedergabe zumindest im Wesentlichen gleichzeitig. Es werden also je eine Zielführungsinformation 103 und ein über die gemeinsame Zeitsteuerungsinformation zugeordnetes Zielführungselement 203 wort- und/oder wortteilsynchron wiedergegeben. Die Wiedergabe der Zielführungsinformation 103 erfolgt dabei akustisch durch die synthetisierte menschliche Sprache, die Wiedergabe des zugeordneten Zielführungselements 203 kann auf unterschiedliche Weise vorgenommen werden. So kann das Zielführungselement 203 genau bei Wiedergabe eines Stichwortes erstmalig für die Dauer eines vorgebbaren Zeitintervalls dargestellt werden; das Zielführungselement 203 kann aber bereits vorher Teil der Routendarstellung 200 gewesen sein und bei Wiedergabe eines durch die Zeitsteuerungsinformation markierten, d.h. bestimmten Stichwortes in der Zielführungsinformation 103 noch durch zusätzliche optische Effekte hervorgehoben werden, wie etwa durch Aufleuchten, Vergrößern der Wiedergabe, usw. Allgemein ausgedrückt wird das Zielführungselement 203 nicht nur wort- und/oder wortteilsynchron angezeigt, sondern die Anzeige wird wort- und/oder wortteilsynchron gesteuert bzw. modifiziert.

Auf diese Weise werden durch die Steuereinheit 104 nacheinander alle auf die vorbeschriebene Art vorbereiteten Paare aus Zielführungsinformation 103 und zugeordnetem Zielführungselement 203 wiedergegeben, und zwar in einer durch die Zielführungsinformationen 103, d.h. die wiederzugebenen Worte, Satzteile und Sätze und damit durch die Zeitsteuerungsinformationen bestimmten Reihenfolge Paar für Paar und in jedem der Paare wort- und/oder wortteilsynchron zueinander. Die Zeitsteuerungsinformationen dienen dabei zur Auslösung, auch als Triggerung bezeichnet, der Wiedergabe der Paare. Diese nacheinander erfolgenden Auslöse- bzw. Triggerungsvorgänge sind in Figur 1 mit Blocksymbolen mit den Bezugszeichen 113 bezeichnet. Damit wird insgesamt eine sehr anschauliche, intuitive Zielführung erhalten.

Die Routendarstellung 200 im Beispiel nach Figur 2 umfasst als weitere Elemente exemplarisch Gaststättensymbole 204, ein Supermarktsymbol 205, ein Tankstellensymbol 211, ein Symbol 206 für den aktuellen Standort des zu führenden Verkehrsteilnehmers sowie unterschiedliche Wegesymbole für Wege 207, Straßen 208, Plätze 209 u.a., die nicht Teil der Route 202 sind. Bevorzugt sind auch Verkehrszeichen wie z.B. Ampeln 210 oder Straßennamen 213 symbolisch dargestellt. Weitere Richtungspfeile 212 können zur Kennzeichnung des weiteren Verlaufs der Route 202 dargestellt sein und z.B. mit Änderung des aktuellen Standortes 206 des Verkehrsteilnehmers vor dem Zielführungselement her verschoben werden oder selbst bei Erreichen durch den aktuellen Standort 206 als Zielführungselement dienen. Alle diese Elemente der Routendarstellung 200 können grundsätzlich Geländemarkierungen und als solche bevorzugt Zielführungselemente bilden, wenn sie von der Route 202 aus gut wahrnehmbar und daher zur Orientierung des zu führenden Verkehrsteilnehmers entlang der Route 202 geeignet sind.

Anhand der Routendarstellung 200 in Figur 2 wird im folgenden ein Beispiel einer Wiedergabe von Zielführungsinformationen 103 und zugeordneten Zielführungselementen 203 dargestellt. Der Verkehrsteilnehmer, z.B. ein Kraftfahrer, befindet sich bei Annäherung an eine mit der Ampel 210 gesicherte Straßenverzweigung am aktuellen Standort 206. Die Route 202, auf der er nach anfänglich erfolgter Eingabe eines Zielortes geführt wird, biegt an dieser Ampel 210 rechts ab, umrundet ein zur Tankstelle 211 gehörendes Gelände, biegt an der Abzweigung an dessen Ende wiederum rechts ab und folgt danach im Linksbogen dem weiteren Straßenverlauf. Von der Sprachausgabeeinheit 102 der Vorrichtung 100 zur Zielführung wird bei Erreichen des aktuellen Standortes 206 am eingezeichneten Ort die Zielführungsinformation 103 mit dem Wortlaut "An der zweiten Ampel nach rechts in die Fontanestraße abbiegen" wiedergegeben. Wortsynchron dazu wird in der Routendarstellung 200 bei Wiedergabe der Worte "zweiten Ampel" das Ampelsymbol 210 als zugeordnetes Zielführungselement optisch hervorgehoben, z.B. durch Blinken oder vergrößerte Darstellung. Bei den Worten "nach rechts" wird als zugeordnetes Zielführungselement der Richtungspfeil 203 entweder erstmalig dargestellt und dabei optisch hervorgehoben, hier z.B. durch farbig sich abhebende Hinterlegung, sanftes Aufglühen des Pfeilsymbols, oder ähnliche Effekte, oder die Darstellung ist bereits vorher begonnen worden, z.B. mit Beginn der beschriebenen Zielführungsinformation 103, und es erfolgt jetzt nur noch die optische Hervorhebung. Schließlich wird bei dem Wort "Fontanestraße" das Straßennamensymbol 213 optisch hervorgehoben, wofür entsprechende Effekte benutzt werden.

Die Zielführung wird in diesem Beispiel entsprechend dadurch fortgesetzt, dass als nächste Zielführungsinformation 103 der Satz "Hinter der Tankstelle nach rechts abbiegen und dem Straßenverlauf folgen" wiedergegeben wird. Wortsynchron dazu blinkt bei Wiedergabe des Wortes "Tankstelle" das Tankstellensymbol 211, bei Wiedergabe der Worte "rechts abbiegen" glüht der weitere Richtungspfeil 212 auf. Bei den Worten "Straßenverlauf folgen" wird z.B. der weitere Richtungspfeil 212 durch einen weiteren optischen Effekt hervorgehoben, z.B. durch eine das Pfeilsymbol in Fahrtrichtung durchlaufende, ggf. wellenförmige Farbänderung.

Die Zeitsteuerungsinformationen können bevorzugt in der ersten Stufe 106 der Sprachausgabeeinheit 102 aus sprachenabhängigen Längen von durch Silben, Wortteile, Worte, Satzteile oder auch Sätze gebildeten Teilabschnitten der Zielführungsinformationen 103 gewonnen werden. Anstelle einzelner Stichworte können auch Stichwortkombinationen bestimmten graphischen Effekten in der Routendarstellung 200 zugeordnet sein. Auch können sich die graphischen Darstellungen zu unterschiedlichen Stichworten oder Stichwortkombinationen zeitlich überlappen; z.B. kann auch nach Abschluss der Wiedergabe des Wortes "Tankstelle" das Tankstellensymbol 211 weiterblinken, während bei Wiedergabe der Worte "rechts abbiegen" bereits der weitere Richtungspfeil 212 aufglüht.

## Patentansprüche

1. Vorrichtung (100) zur Zielführung, insbesondere eines Fahrzeugs, entlang einer Route (202), mit einer Anzeigeeinheit (101) zum Erzeugen und Anzeigen einer wenigstens ein optisches Zielführungselement (203) umfassenden Routendarstellung (200), einer Sprachausgabeeinheit (102) zum Erzeugen (106) und Ausgeben wenigstens einer Zielführungsinformation (103) als gesprochene Worte und/oder Sätze und/ oder Teile davon, sowie einer Steuereinheit (104) zum Steuern des Anzeigens des wenigstens einen optischen Zielführungselements (203) wort- und/oder wortteilsynchron zum Ausgeben der wenigstens einen Zielführungsinformation (103).

2. Vorrichtung (100) nach Anspruch 1, **dadurch gekennzeichnet, dass** die Sprachausgabeeinheit (102) eine Routenführungseinheit (105) umfasst, die zum Erzeugen (106) der wenigstens einen Zielführungsinformation (103) als gesprochene Worte und/oder Sätze und/ oder Wortteile und/oder Satzteile und zum wort- und/oder wortteilsynchronen Verknüpfen (107) der wenigstens einen Zielführungsinformation (103) mit wenigstens einer Zeitsteuerungsinformation für die zeitliche Steuerung wenigstens eines Signalverarbeitungsschrittes zur Darstellung des wenigstens einen Zielführungselements (203) eingerichtet ist.

3. Vorrichtung (100) nach Anspruch 2, **dadurch gekennzeichnet, dass** die Anzeigeeinheit (101) eine Signalaufbereitungseinheit (108) umfasst zum Analysieren der wenigstens einen Zielführungsinformation (103) und der damit verknüpften wenigstens einen Zeitsteuerungsinformation und zum Zuordnen der wenigstens einen Zeitsteuerungsinformation zu dem wenigstens einen Signalverarbeitungsschritt zur Darstellung des wenigstens einen Zielführungselements (203).

4. Vorrichtung (100) nach Anspruch 3, **dadurch gekennzeichnet, dass** die Steuereinheit (104) mit der Routenführungseinheit (105) und der Signalaufbereitungseinheit (108) verbunden ist zum der Steuereinheit (104) Zuführen der wenigstens einen Zeitsteuerungsinformation und der damit verknüpften wenigstens einen Zielführungsinformation (103) einerseits sowie des wenigstens einen Signalverarbeitungsschrittes zur Darstellung des wenigstens einen Zielführungselements (203) und der zugeordneten wenigstens einen Zeitsteuerungsinformation andererseits.

5. Vorrichtung (100) nach Anspruch 4, **dadurch gekennzeichnet, dass** die Steuereinheit (104) eingerichtet ist zum korrelierten, insbesondere zumindest im wesentlichen gleichzeitigen, Auslösen der Wiedergabe je einer der mit der wenigstens einen Zeitsteuerungsinformation verknüpften wenigstens einen Zielführungsinformation (103) durch die Sprachausgabeeinheit (102) einerseits und des der wenigstens einen Zeitsteuerungsinformation zugeordneten wenigstens einen Signalverarbeitungsschrittes zur Darstellung des wenigstens einen Zielführungselements (203) durch die Anzeigeeinheit (101) andererseits.

6. Verfahren zur Zielführung, insbesondere eines Fahrzeugs, entlang einer Route, wobei durch eine Routenführungseinheit (105) aus Daten der Route wenigstens eine Zielführungsinformation (103) als gesprochene Worte und/oder Sätze und/ oder Wortteile und/oder Satzteile erzeugt und die wenigstens eine Zielführungsinformation (103) mit wenigstens einer Zeitsteuerungsinformation wort- und/oder wortteilsynchron verknüpft wird; wobei weiterhin in einer Signalaufbereitungseinheit (108) die wenigstens eine Zielführungsinformation (103) und die damit verknüpfte wenigstens eine Zeitsteuerungsinformation analysiert werden und die wenigstens eine Zeitsteuerungsinformation wenigstens einem Signalverarbeitungsschritt zur Darstellung wenigstens eines optischen Zielführungselements (203) in einer Anzeigeeinheit (101) zugeordnet wird; und wobei durch eine Steuereinheit (104) die Wiedergabe der mit der wenigstens einen Zeitsteuerungsinformation wort- und/oder wortteilsynchron verknüpften wenigstens einen Zielführungsinformation (103) einerseits und des der wenigstens einen Zeitsteuerungsinformation zugeordneten wenigstens einen Signalverarbeitungsschrittes zur Darstellung des wenigstens einen optischen Zielführungselements (203) andererseits korreliert, insbesondere zumindest im wesentlichen gleichzeitig, ausgelöst werden.

7. Computerprogrammprodukt, aufweisend Programmteile zum Ausführen eines Verfahrens nach Anspruch 6.

8. Maschinenlesbare, insbesondere computerlesbare, Datenstruktur, erzeugt durch ein Verfahren gemäß Anspruch 6 und/oder durch mindestens ein Computerprogrammprodukt gemäß Anspruch 7.

9. Maschinenlesbarer, insbesondere computerlesbarer, Datenträger, auf dem mindestens ein Computerprogrammprodukt gemäß Anspruch 7 aufgezeichnet und/oder gespeichert ist und/oder auf dem mindestens eine Datenstruktur gemäß Anspruch 8 zum Abruf bereit gehalten ist.
